# EUROPEAN PATENT SPECIFICATION

(11) **EP 3 399 627 B1**
(45) Date of publication and mention of the grant of the patent: **24.03.2021**
(21) Application number: 17169573.7
(22) Date of filing: 04.05.2017
(51) Int. Cl.: H02K 5/22, H02K 3/52, H02K 15/00, H02K 5/10, H02K 24/00

(54) **ELECTRIC DEVICE WITH WIRING GUIDE ELEMENT**
ELEKTRISCHE VORRICHTUNG MIT VERDRAHTUNGSFÜHRUNGSELEMENT
DISPOSITIF ÉLECTRIQUE COMPRENANT UN ÉLÉMENT DE GUIDAGE DE CÂBLAGE

(43) Date of publication of application: 07.11.2018
(73) Proprietor: Tyco Electronics Belgium EC BVBA, 8020 Oostkamp (BE); TE Connectivity Germany GmbH, 64625 Bensheim (DE)
(72) Inventor: Weiss, Alexander, 8600 Keiem (BE); Van Reybrouck, Koen, 8020 Oostkamp (BE); Ocket, Tom, 8820 Torhout (BE); Van Nimmen, Steven, 9031 Drongen (BE); Ossieur, Pieter-Jan, 9000 Gent (BE); Siotto, Michael, 69117 Heidelberg (DE)
(74) Representative: Grünecker Patent- und Rechtsanwälte PartG mbB

(56) References cited:
- DE-A1- 4 321 540
- JP-A- S5 725 133
- JP-A- H09 327 164
- JP-A- 2005 318 726
- US-B2- 9 136 748

## Description

The invention relates to an electric device having a housing structure and an internal wiring for at least one coil assembly, the housing structure comprising a ring-shaped or disk-shaped base part, a plurality of coil assemblies arranged in a circumferential direction at an inner side of the base part, the base part having a terminal area for connecting the internal wiring to at least one outside electric conductor, and a cover part assembled to the base part for covering the terminal area, the cover part having a trough section into which the terminal area at least partly extends, the trough section being a hollow receptacle for receiving volume accessible from one side for the internal wiring the trough section having at least one trough wall, which at least in sections abuts the base part to form a sealing surface.

Electric devices such as motors or, in particular rotational or linear motion and/or position measurement devices like resolvers often need to withstand harsh operational environments, for instance when operated in transmission oil, which is highly corrosive at increased operation temperatures.

One solution of the art is to cover the terminal area of such electric devices with a cover part, in particular a cover part having a trough section into which the terminal area extends. The internal wiring of electric devices is connected to the at least one outside electric conductor in the terminal area, wherein in particular the regions of the electric contact need to be protected from the operational environment.

Certain operational environments require further protection of the terminal area, which may be performed by potting the trough section, i.e. by filling said trough section with a filling medium.

During and/or after assembly of the electric devices, their internal wiring, which may for instance be embodied as a plurality of wires wound around coils, may be led from a potting free area into a potting area.

One electric device of the art is shown in DE 43 21 540 A1. The electrical motor with a stator lamination package shown therein may be covered by covering elements formed according to the form of the motor. The electrical motor comprises a connector housing with chambers in which ends of the internal wiring are inserted. The covering elements comprise pins for redirecting and guiding the ends of the internal wiring to the connector housing. JP S 5725133 A discloses a terminal box housing a wiring, which is provided with a cover part to cover such wiring; the cover part is provided with a section that forms a receiving volume for the wiring. In US 9 136 748 B2, a resolver with a plurality of core assemblies and internal wiring is shown, wherein the resolver is provided with a housing part and a cover that forms a trough that may be filled with a resin. In US 9 136 748 B2, the wires are wound around a plurality of pins.

The solutions of the art have the disadvantage that the cover part may touch the internal wiring during and/or after assembly which may cause stress and damage to the wiring.

The problem to be solved by the present invention is therefore to provide an electric device whose internal wiring is protected during and/or after assembly.

The electric device of the aforementioned type solves the above problem in that the base part comprises at least one wiring guide element which supports the internal wiring at a position spaced apart from the sealing surface opposite the trough wall such that the internal wiring extends over the trough wall into the trough section to the terminal area.

In the following, different embodiments of the present invention will be described, wherein said embodiments are advantageous on their own. Technical features of the following embodiments may therefore be arbitrarily combined or omitted.

The electric device may be any device with a wound wire requiring wire protection.

Such an electric device may be a motor, a rotational or linear motion device, or a position measurement device detecting a rotational or linear motion.

The at least one wiring guide element therefore supports the wiring in a position in which the trough wall may not touch or damage the wiring.

The housing structure of the electric device may be understood as a component of the electric device which comprises and/or supports further elements of the electric device, as for instance the internal wiring. The housing structure may have any suitable shape, which may for instance be a ring-shape in case of a resolver.

The electric device may comprise a defined area for connecting the internal wiring to at least one outside electric connector, i.e. an electric conductor provided from outside the electric device. The outside electric conductor may for instance be used for power supply means or for providing signals from the electric device to further devices outside the electric device. In this defined area, the terminal area may be provided on one side of the electric device, wherein more than one terminal area may be comprised in the electric device.

Within the at least one terminal area, the internal wiring is electrically connected to the at least one outside electric conductor, wherein in general a wire insulation has to be removed.

Especially those regions of the wiring without insulation may be prone to corrosion and are therefore preferentially protected by being inserted into the trough section of the cover part.

The trough section of the cover part is a hollow receptacle or receiving volume which may be accessible from one side. The trough section comprises a trough opening from which the trough section is accessible, a trough bottom located opposite the trough opening and a trough or potting wall which surrounds the trough section.

According to the invention the trough wall, which at least in sections abuts the base part, defines the sealing surface, which is the surface of mechanical abutment between the trough wall and the base part. The sealing surface may be located in one single plane or may comprise steps that may result from steps in the base part and corresponding depressions in the trough wall respectively depressions in the base part and steps in the trough wall.

According to the invention the internal wiring of the electric device is guided by the wiring guide elements over the trough wall into the trough section to the terminal area such that the at least one wiring guide element supports or holds the wiring spaced apart from the trough wall as well as spaced apart from the sealing surface which is defined by the abutment between the trough wall and the base part.

The at least one wiring guide element may comprise at least one supporting area or supporting surface which supports the wiring in a direction away from the trough wall, i.e. opposite the trough wall with respect to the sealing surface.

The at least one wiring guide element may further extend adjacent to the trough wall and may essentially be oriented parallel to the trough wall and the sealing surface. In the assembled state of the electric device, the trough wall may at least in sections abut the at least one wiring guide element.

The supporting surface of the at least one wiring guide element may face in a direction opposite to the abutment surface of the base part.

The base part is embodied as a ring-shaped or disk-shaped element which may comprise a circumferentially embodied side surface facing in the radial direction. The circumferential side surface may comprise a circumferentially embodied projection, protrusion or edge.

The internal wiring may be positioned on the base part on the same side of the sealing surface as the cover part. Such an arrangement has the advantage that the assembly and winding of the electric device may be performed from only one side without the need for accessing the opposite side of the electric device. The arrangement is in particular advantageous for the winding of the internal wiring as no complicated winding machine is necessary. The internal wiring may be located adjacent to the terminal area, wherein the internal wiring may only need to be protected in the terminal area by the trough section.

In another embodiment of the inventive electric device, the at least one wiring guide element is a protrusion extending away from the base part towards the cover part. A wiring guide element embodied as a protrusion is advantageous, as the cover part is assembled to the base part in a predetermined manner. The protruding wiring guide element or wiring guide elements may mechanically determine or define the position of the cover part, in particular the position of the trough section during assembly of the cover part to the base part.

In another embodiment of the inventive electric device, the at least one wiring guide element projects from a side wall of the base part, a center of the side wall being oriented essentially perpendicular to a radial direction of the base part. Especially at side walls comprising edges, the internal wiring is prone to damage during installation of the cover part. The at least one wiring guide element projecting from the side wall of the base part securely supports the wiring at a position spaced apart from the sealing surface.

The at least one wiring guide element may project from the side wall of the base part in a direction essentially parallel to the sealing surface or may, as described above, also project in a direction towards the cover part, wherein the at least one wiring guide element may extend adjacent to the trough wall.

In a further embodiment of the electric device, the base part comprises a main section and the terminal area, wherein the terminal section protrudes from a main section of the base part. A terminal section protruding from the main section of the base part facilitates the insertion of the terminal section into the trough section and therefore facilitates protection of the terminal section.

The terminal section may protrude from the main section in a radial direction of the ring-shaped or disk-shaped base part or may protrude into a direction perpendicular to the ring or disk, respectively into a direction comprising both of the above directions. The terminal section may therefore protrude from the circumferentially embodied side surface of the base part, respectively from the circumferential projection, protrusion or edge of the base part.

The base part comprises the preferentially ring-shaped or disk-shaped main section and the terminal area.

In another embodiment of the inventive electric device, the internal wiring is held between a supporting surface of the at least one wiring guide element and the main section. The supporting surface of the at least one wiring guide element and the main section of the base part may therefore advantageously define the position and thus the guided path of the internal wiring.

The internal wiring may be supported by both the supporting surface of the at least one wiring guide element and the main section. The supporting surface and the main section, in particular the circumferentially embodied side surface of the main section may be oriented under an angle of essentially 90° to each other. They may therefore define a position or guided path of the internal wiring for securely guiding said wiring over the trough wall.

In a further embodiment of the inventive electric device, the at least one wiring guide element comprises at least one tilted surface, wherein the at least one tilted surface and the sealing surface are oriented under an obtuse angle, and wherein the at least one tilted surface directly merges into the supporting surface.

Such a tilted surface supports positioning of the internal wiring. The wiring, in particular a single wire, may be led from the base part towards the at least one wiring guide element and wound around the at least one wiring guide element, wherein the section of the internal wiring which is wound around the at least one wiring guide element abuts the tilted surface. The wiring may therefore be guided and slid along the tilted surface towards the portion of the at least one wiring guide element which supports the wiring at a position spaced apart from the sealing surface opposite the trough wall. Said portion may be the supporting surface of the at least one wiring guide element. The tilted surface may therefore be located adjacent to the supporting surface and may be oriented under an obtuse angle to the supporting surface.

The tilted surface may directly merge into the supporting surface, wherein in the merging region a stop may be comprised. The stop may be embodied such that the wiring, in particular a single wire, sliding along the tilted surface towards the supporting surface may be slid towards the supporting surface in an unhindered manner, whereas sliding the wiring or wire along the supporting surface towards the tilted surface, the wiring may abut a projection or bump in order to prevent the internal wiring to be unintentionally slid from the supporting surface to the tilted surface.

The tilted surface may be oriented partially along a radial direction of the ring-shaped or disk-shaped base part.

The tilted surface may facilitate guiding the internal wiring from the same side of the sealing surface as the cover part over the trough wall into the trough section to the terminal area. By means of the tilted surface the internal wiring may be easily moved into a position in which it is supported spaced apart from the sealing surface opposite the trough wall.

In a further embodiment of the inventive electric device a pair of wiring guide elements is provided, wherein the trough wall is located opposite a gap between the wiring guide elements. Such an embodiment has the advantage that the internal wiring is supported at a position spaced apart from the sealing surface opposite the trough wall over the entire thickness of the trough wall. The positioning of the trough wall of the cover part may therefore also comprise a play which does not increase the risk of touching or even damaging the internal wiring by the trough wall.

The two wiring guide elements may therefore be understood as two guiding fingers, around which the internal wiring is partially wound and guided over the trough wall.

In another embodiment of the inventive electric device the trough wall protrudes into the gap between the wiring guide elements. As described above, the wiring guide elements may be applied for mechanically abutting and guiding the trough wall, i.e. the trough section of the cover part, during assembly of the cover part to the base part. Receiving the trough wall within the wiring guide elements, i.e. in the gap between the wiring guide elements, a predetermined assembly position of the cover part with respect to the base part is easily achieved.

The trough wall may comprise a protrusion which protrudes into the gap between the two wiring guide elements. In this embodiment the two wiring guide elements are oriented essentially along the radial direction of the ring-shaped or disk -shaped base part.

In another embodiment, one of the two wiring guide elements extends into the trough section. In this embodiment, at least one, preferentially two of the two wiring guide elements, extends into a direction towards the cover part. Two wiring guide elements embodied in this manner define a gap into which the trough wall may at least partially be inserted. With this embodiment of the electric device, the trough section and therefore the cover part may be easily positioned with respect to the base part, at least in a direction between the two wiring guide elements.

In another embodiment of the inventive electric device an auxiliary wiring guide element is provided which guides the internal wiring from the base part towards the at least one wiring guide element. Such an auxiliary wiring guide element may predetermine a guiding path of the internal wiring and may guarantee a redirection angle of the internal wiring at the wiring guide element similar to an angle between the corresponding trough wall and the wiring guide element.

In particular, the auxiliary wiring guide element may predetermine the guiding path of the internal wiring such that the redirection angle of the internal wiring at the wiring guide element amounts to essentially 90°. Such a guiding path of the internal wiring may prevent the internal wiring crossing the sealing area between the trough wall and the base part.

The auxiliary wiring guide element may be embodied as a cylindrical post or pin extending from the base part essentially perpendicular to the sealing surface. The auxiliary wiring guide element may be positioned in a region of the base part which is not covered by the cover part.

The auxiliary wiring guide element may be embodied in a monolithic manner with the at least one wiring guide element. The wiring guide element and auxiliary wiring guide element may therefore predetermine the guiding path of the internal wiring and may, for instance, comprise a bend section around which the internal wiring may be guided.

In another embodiment of the inventive electric device two trough walls at two opposing sides of the terminal area are provided, wherein the wiring extends over the trough walls into the trough section to the terminal area and wherein at least two wiring guide elements are provided which support the wiring at a position spaced apart from the sealing surface opposite the corresponding trough wall. Such an embodiment has the advantage of a possible symmetric wiring of the electric device. Furthermore, depending on the number of wires of the internal wiring, the required space for guiding the wires of the internal wiring over the corresponding trough walls may be reduced.

The at least two wiring guide elements may be oriented essentially parallel to each other, whereas in the embodiment applying a ring-shaped or disk-shaped base part, the two wiring guide elements at the two opposing sides of the terminal area may also be oriented along the radial direction. The two wiring guide elements may thus be oriented at an angle to each other which depends on their distance along the circumference of the ring-shaped or disk-shaped base part. In addition to the orientation of the two wiring guide elements along the radial direction, one or both wiring guide elements may also extend in portions along a direction essentially perpendicular to the ring-shaped or disk-shaped base part, i.e. towards the cover part.

In another embodiment of the inventive electric device two pairs of wiring guide elements are provided at the two opposing sides of the terminal area. This embodiment combines the advantages of a symmetric wiring, respectively a symmetric guiding of the wiring over the corresponding trough walls into the terminal area and a possible guiding of the trough portion, i.e. the cover part, during assembly of the cover part to the base part. The cover part may therefore be precisely positioned and guided between each pair of wiring guide elements.

Preferentially, each pair of wiring guide elements comprises an inner wiring guide element and an outer wiring guide element. The inner wiring guide element may protrude into the trough section, whereas the second wiring guide element may extend adjacent to the corresponding trough wall.

In another embodiment of the inventive electric device the internal wiring is led from the housing structure on the cover side of the sealing plane, essentially parallel to at least one trough wall, is guided through the sealing plane, abuts the supporting surface of the at least one wiring guide element and extends over the at least one trough wall through the sealing plane into the terminal area. The described path of the wiring may be different in further embodiments of the present invention. The internal wiring may for instance be led from the housing structure on a side opposite the cover side of the sealing plane.

The internal wiring may in particular comprise a plurality of wires, which may be copper wires with lacquer isolation and a diameter in the range of 0.1 to 0.2 mm. The internal wiring may in particular comprise a plurality of copper wires wound around a plurality of coil assemblies of an electric component, such as a resolver or motor, wherein the coil assemblies are arranged circumferentially around the center of a ring-shaped or disk-shaped base part. In particular, the number of coil assemblies may correspond to the number of wires of the internal wiring.

Half of the wires may be guided by a first pair of wiring guide elements on a first side of the terminal area and a second half of the wires may be guided by the second pair of wiring guide elements on a second side of the terminal area, wherein all wires of the internal wiring may extend over the trough walls into the trough section to the terminal area.

In yet another embodiment of the inventive electric device, the trough section is filled with a filling medium at least partially embedding the terminal area. Filling a preferentially liquid medium into the trough section has the advantage that the terminal area may be sufficiently protected against any environmental condition, as for instance oil or other eventually corrosive liquids. The filling medium may in particular embed, that is surround and/or cover the portions, in which the electric connection between the wiring and the at least one outer electric conductor is established.

The filling medium may be a resin, as for instance an epoxy resin, which hardens after a predetermined time after mixing the epoxy resin components. Depending on the environment in which the electric device will be applied, the filling medium may also comprise a silicone, grease or similar material. The filling medium may be inserted into the trough section and may fill the trough section up to the sealing surface defined by the abutment of the trough wall to the base part. The filling medium may on one hand seal off the terminal area and on the other hand additionally fix the cover part to the base part. Once the filling medium is inserted into the trough section and especially after hardening of the filling medium, replacing a damaged wire of the internal wiring is hardly possible any longer. Therefore, it is highly advantageous if a damage of the internal wiring during and/or after assembly of the cover part to the base part is prevented. The present invention prevents such a damage of the internal wiring.

The invention will be described in more detail by way of example hereinafter using a specific embodiment and with reference to the accompanying drawings. The described embodiments only show possible configurations in which individual technical features may, however, be arbitrarily combined or omitted. Equal elements illustrated in the drawings are provided with equal reference signs.

In the drawings:
- Fig. 1: shows a perspective view of an electric device with wiring guide elements;
- Fig. 2: shows a perspective view of an electric device with a cover part installed;
- Fig. 3a: shows a perspective view of the terminal area of the electric device;
- Fig. 3b: shows a simplified schematic view of the present invention;
- Fig. 4: shows a perspective view of the cover part;
- Fig. 5: shows a detail of the electric device of Fig. 2 from a different perspective.
- Fig. 6: shows a perspective view of the terminal area of a second embodiment of the electric device;
- Fig. 7: shows the electric device of Fig. 6 in a different perspective view;
- Fig. 8: shows a perspective view of the terminal area with the cover part installed; and
- Fig. 9: shows the terminal area of Fig. 8 with a potting.

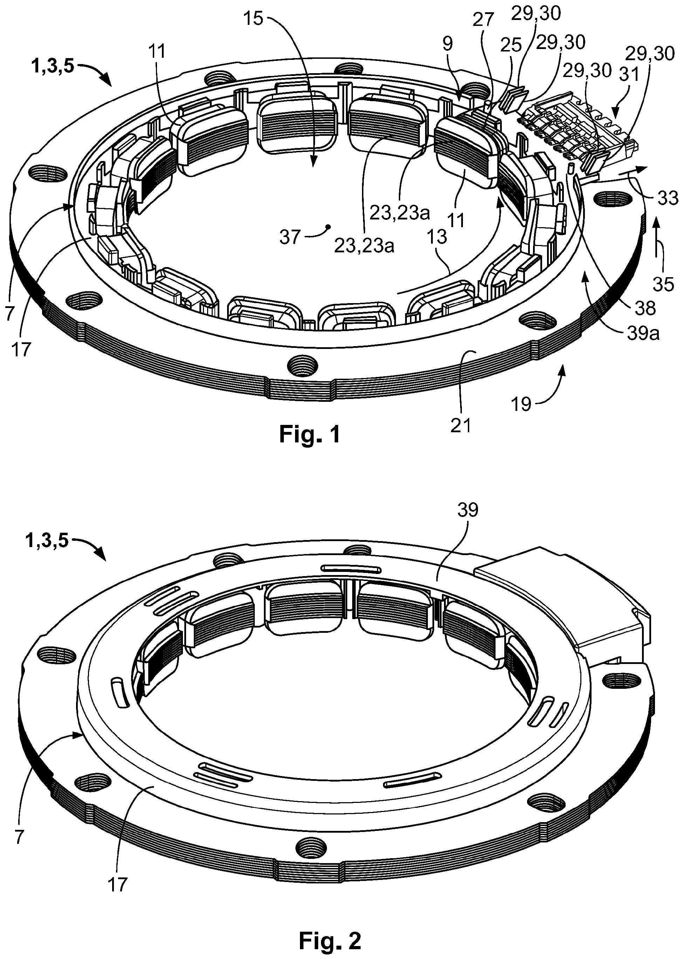

In Fig. 1 an electric device 1 is shown in a perspective view. The electric device 1 is a resolver 3 representing electric devices 1 such as motors (not shown) or, in particular, rotational or linear motion and/or position measurement devices 5.

The resolver 3 comprises a housing structure 7 and internal wiring 9, wherein the internal wiring 9 is represented by only one coil assembly 11 in Fig. 1. The resolver 3 shown in Fig. 1 comprises a plurality of coil assemblies 11 arranged in a circumferential direction 13 at an inner side 15 of a ring-shaped base part 17.

From an outer side 19 of the resolver 3 an essentially ring-shaped magnetic core 21 extends into the base part 17, wherein inward projections 23, also referred to as poles 23a, of the core 21 (only one inward projection 23 is provided with a reference numeral in Fig. 1) extend from the outer side 19 into the corresponding coil assemblies 11.

The core 21 contains the poles 23a and is preferentially overmolded with a polymere to form the base part 17 and the housing structure 7.

The internal wiring 9 shown in Fig. 1 comprises one single wire 25 which is wound around the coil assembly 11, in particular wound around the inward projection 23 of the magnetic core 21.

The wire 25 is led to an auxiliary wiring guide member 27 and subsequently to two wiring guide members 29 and towards a terminal area 31. The base part 17 comprises a main section 38 and the terminal area 31.

The wiring guide members 29 shown in the figures are protrusions 30 protruding from the base part 17.

The terminal area 31, as well as the four wiring guide members 29 extend from the base part 17 partially in a radial direction 33 and partially in a vertical direction 35. The vertical direction 35 is oriented essentially perpendicular to the radial direction 33 and the circumferential direction 13. Furthermore it is noted that Fig. 1 only shows one possible radial direction 33, which is representative for the plurality of radial directions 33 pointing from the center 37 of the ring-shaped base part 17 towards the ring-shaped base part 17.

In Fig. 1 a cover side 39a of the resolver 3 is visible. The terminal area 31 as well as the wiring guide members are located on the cover side 39a.

In Fig. 2 the resolver 3 of Fig. 1 is shown, whereas a cover part 39 is attached to the housing structure 7, respectively to the base part 17. The cover part 39 covers in particular the terminal area 31 (not visible in Fig. 2) protecting said terminal area 31 from environmental influences.

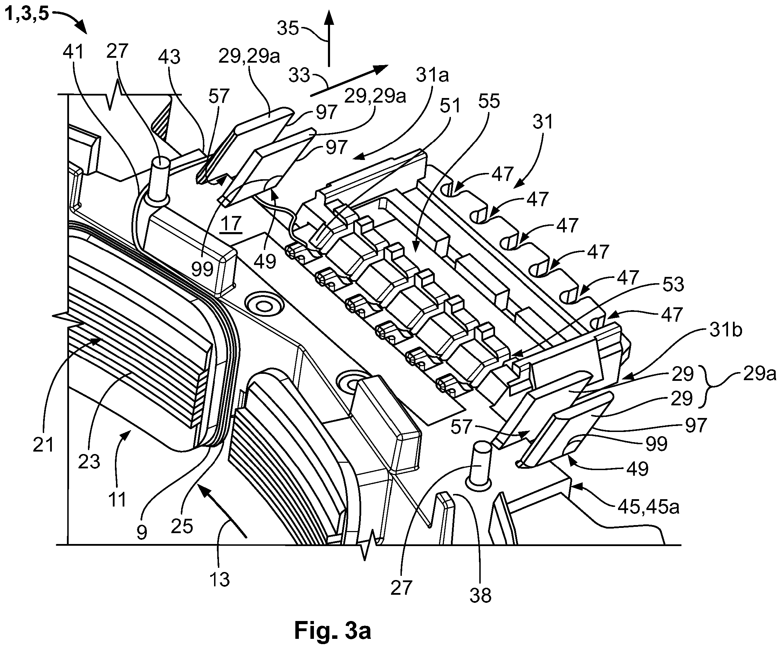

Fig. 3a shows a detail of the resolver 3 of Fig. 1, whereas the internal wiring 9 is schematically shown for one coil assembly 11.

The wire 25 is wound around an inward projection 23 of the magnetic core 21 and a wire end 41 is extending away from the coil assembly 11 on the base part 17, is wound around the auxiliary wiring guide member 27 and redirected essentially in the radial direction 33 towards an edge 43 of the base part 17, which edge 43 is oriented essentially perpendicular to the extension of the wire end 41 after passing the auxiliary wiring guide member 27.

The edge 43 is comprised in a partial side wall 45 which may either be a partially circumferentially embodied and bent surface facing into the radial direction 33 or a plane side wall 45 whose center is oriented essentially perpendicular to the radial direction 33 as shown in the embodiment of the inventive electric device 1 of Fig. 3a. Other shapes of the side wall 45 are possible as well.

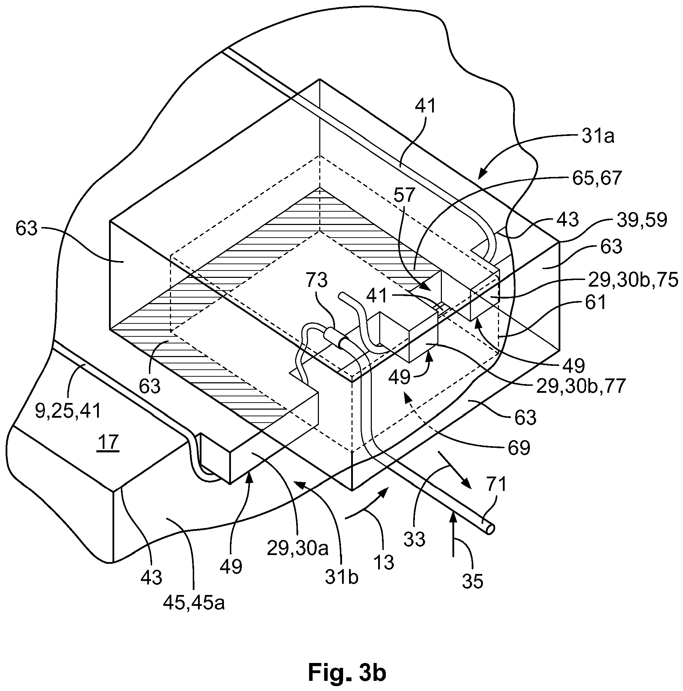

The wire end 41 is supported at a supporting surface 49 which is embodied at each of the wiring guide members 29 and which faces opposite the vertical direction 35. Subsequently, after passing the supporting surfaces 49, the wire end 41 is extending partially in the vertical direction 35 and partially opposite to the circumferential direction 13 and led to connection means 51 of the terminal area 31. The position of the wire end 41 is solely shown schematically in Fig. 3, wherein the wire end 41 may be guided to any suitable position within the terminal area 31 of the resolver 3.

The wiring guide members 29 comprise a tilted surface 97 essentially facing away from the base part 17. The tilted surface 97 of each wiring guide member is oriented under an obtuse angle 99 to the corresponding supporting surface 49.

During assembly of the wiring 9 and in particular during positioning of the wire end 41 at the tilted surface 97, the wire end 41 may slide along the tilted surface 97 until reaching the supporting surface 49.

In Fig. 3a further details of the terminal area 31 are visible. The terminal area 31 for instance comprises connector receptacles 47 for receiving, positioning and fixing outside electric conductors (not shown in Fig. 3a), receptacle grooves 53 (only one receptacle groove 53 is provided with a reference numeral) into which for instance connection tabs (not shown) may be inserted, and a filling opening 55 through which a filling medium (not shown) may be inserted.

Symmetrically along the circumferential direction 13, on two opposing sides 31a, 31b of the terminal area 31 a pair of wiring guide members 29 and one auxiliary wiring guide member 27 is embodied on the base part 17.

Furthermore, Fig. 3a shows a gap 57 embodied between the two wiring guide members 29 of each pair 29a of wiring guide members 29.

Fig. 3b shows a simplified working principle of the present invention and the partial side wall 45 embodied as a plane side wall 45a, the edge 43 and a cut portion of the base part 17.

Furthermore, Fig. 3b shows two embodiments of wiring guide members 29, wherein the first embodiment of the wiring guide member 30a and the second embodiment of the wiring guide member 30b differ from each other in their extension essentially along the circumferential direction 13.

Both embodiments of the wiring guide member 30a, 30b extend essentially along the radial direction 33 over the edge 43.

The wire end 41 extends along the base part 17 on the cover side 39a, around the edge 43 and guided by means of a supporting surface 49 essentially along or opposite to the circumferential direction 13.

On the base part 17 a simplified schematically drawn cover part 39 is indicated by a cuboid 59 comprising a trough section 61 which is indicated by dashed lines. The trough section 61 shown in Fig. 3b opens in a direction opposite to the vertical direction 35 and within the trough section 61 of the cover part 39 the terminal area 31 is received. The terminal area 31 is not explicitly shown in Fig. 3b (see for instance Fig. 1 and Fig. 3a).

The cover part 39 further comprises four trough walls 63, wherein said trough walls 63 abut the base part 17 in sections. The abutment area 65 is indicated by a hatching and defines a sealing surface 67.

The supporting surface 49 of the wiring guide member 29 is supporting the wiring 9 (which is represented by a single wire 25 in Fig. 3b) at a position spaced apart from the sealing surface 67 opposite the trough wall 63. The wire end 41 extends into the trough section 61 through a trough opening 69 and is connected to an outside electric conductor 71, wherein a connection portion 73 between the wire end 41 and the outside electric conductor 71 is located completely within the trough section 61.

In Fig. 3b a second wire end 41 extends on one 31a of the two opposite sides 31a, 31b of the cover part 39 on the base part 17, is bent around the corner 43 and supported by the supporting surface 49 of the second embodiment of the wiring guide member 30b.

This wire end 41, however, is supported by an outer wiring guide element 75, extends adjacent to the gap 57 between the two wiring guide elements 30b and is subsequently supported by the supporting surface 49 of an inner wiring guide element 77 and finally extends essentially in the vertical direction 35 through the trough opening 69 into the trough section 61.

In Fig. 3b the wire end 41 which is supported by the second embodiment of the wiring guide members 30b is not connected to a further outside electric conductor 71 for reasons of visibility.

In further embodiments of the wiring guide members 29, the outer wiring guide members 75 and/or the inner wiring guide members 77 may additionally partially extend into the vertical direction 35, such that the inner wiring guide member 77 may extend into the trough section 61. Furthermore, inner and/or outer wiring guide members 75, 77 embodied that way would allow guiding of the cover part 39 by means of the trough walls 63 guided within the gap 57 between the wiring guide members 29.

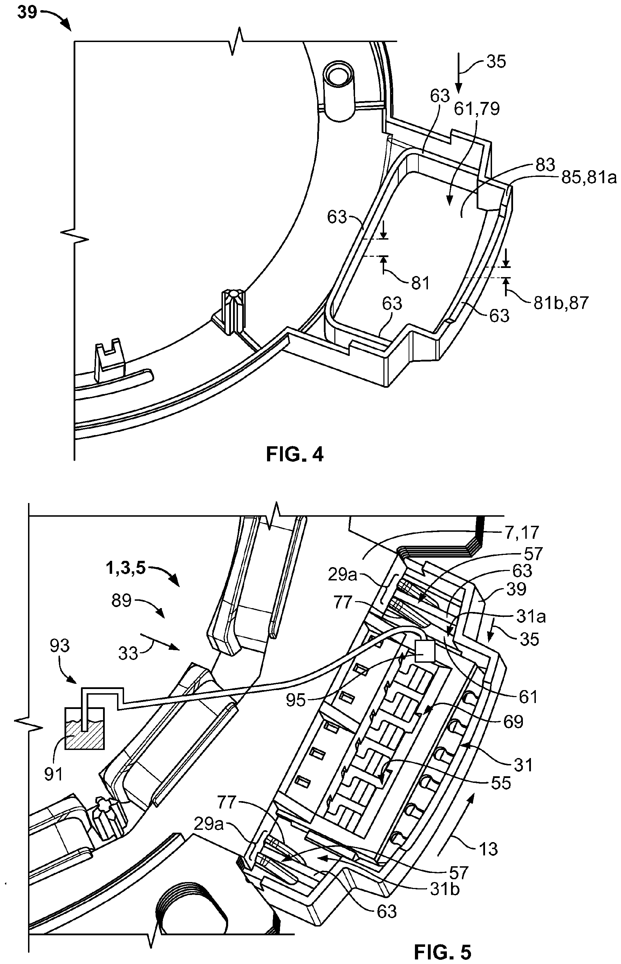

Fig. 4 shows the cover part 39 in a perspective view essentially along the vertical direction 35. The cover part 39 of Fig. 4 is essentially ring-shaped, whereas only a section of the cover part 39 is shown in Fig. 4. In different embodiments (not shown), the cover part 39 may be embodied to only locally cover the terminal area 31.

In Fig. 4 the trough section 61 is visible and it can be seen that said trough section 61 is surrounded by the trough walls 63. The trough section 61 is therefore a volume 79 which is solely accessible in the vertical direction 35.

A wall height 81 may be measured from the trough bottom 83. The trough section 61 may comprise wall sections 85 of increased wall height 81a, wherein in general the minimum wall height 81b determines a filling height 87. Up to the filling height 87 the trough section 61 may be filled with a filling medium (not shown). However, if the minimum wall height 81b abuts the base part 17 in the abutment area 65 (see Fig. 3b) the filling height 87 may exceed said minimum wall height 81b.

Fig. 5 shows the cover part 39 of Fig. 4 attached to the housing structure 7, respectively shows the resolver 3 of Fig. 2 essentially seen along the vertical direction 35. The trough section 61 of the cover part 39 receives the terminal area 31 and on both opposing sides 31a, 31b of the terminal area 31 at least in portions the corresponding inner wiring guide members 77 of the pairs 29a of wiring guide members 29.

The trough walls 63 on the opposing sides 31a, 31b of the trough section 61 are received in portions in the gap 57 of the corresponding pair 29a of wiring guide members 29. Therefore, the relative position between the base part 17 and the cover part 39 is determined and opposite to the circumferential direction 13. Due to the shape and/or size of the terminal section 31 and the trough section 61, the position of the cover part 39 with respect to the base part 17 may also be determined in and/or opposite to the radial direction 33.

Fig. 5 shows the resolver 3 in a pre-sealed state 89, in which the base part 17 and the cover part 39 are solely attached or mounted to each other. In the pre-sealed state 89 the terminal area 31 is protected from environmental influences by the cover part 39, in particular the trough section 61. However, this protection is solely effective if the influence on the terminal area 31 is directed opposite to the vertical direction 35 (c.p. Fig. 1). Possible influences of this kind may for instance be solid particles moving in a direction opposite to the vertical direction 35 or mechanical stress to the resolver 3 acting along the same direction.

For protecting the terminal area 31 against environmental influences such as chemical substances in the liquid or gaseous phase, the trough section 61 may be filled by a filling medium 91 which is inserted via the trough opening 69 and preferentially through the filling opening 55 of the terminal section 31.

The filling medium 91 may be inserted into the trough section 61 by means of an appropriate filling assembly 93 providing the filling medium 91 through a nozzle 95. Filling of the trough section 61 may be performed automatically or by hand.

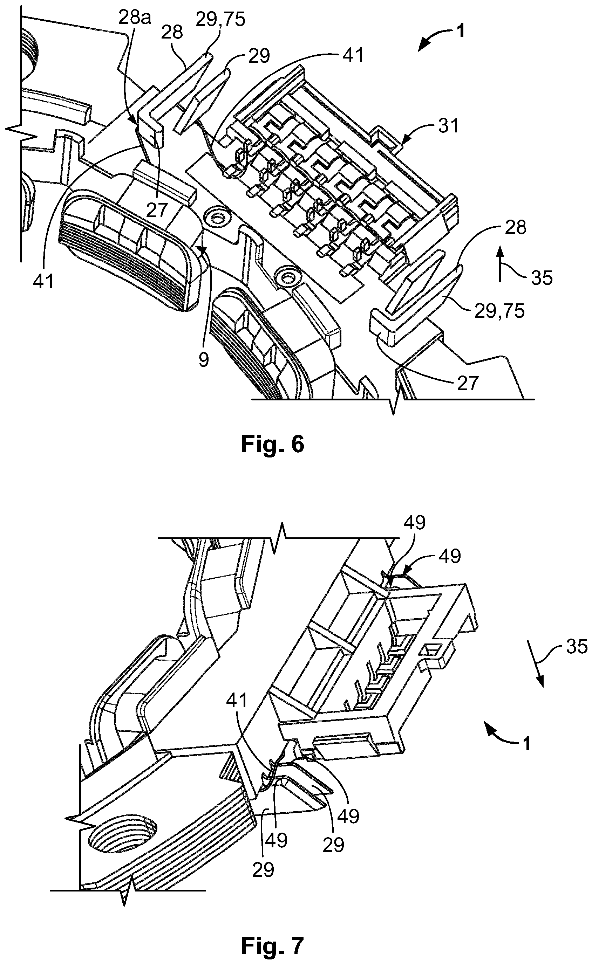

Fig. 6 shows the electric device 1 comprising a second embodiment of the wiring guide member 29, in particular the outer wiring guide member 75.

The outer wiring guide member 75 of the embodiment shown in Fig. 6 comprises a second embodiment of the auxiliary wiring guide member 27, which is embodied monolithically with the outer wiring guide member 75. The outer wiring guide member 75 and the auxiliary wiring guide member 27 therefore form a monolithic wiring guide member 28.

In Fig. 6, the wire end 41 is provided from the internal wiring 9 (see for instance Fig. 3a) and is guided around a corner 28a of the monolithic wiring guide member 28. Similar to the embodiment of the electric device 1 shown in Fig. 3a, the wire end 41 is guided along and below the wiring guide elements 29 and is supported by the supporting surfaces 49 (not shown in Fig. 6, see Fig. 7) into the terminal area 31.

Fig. 7 shows the electric device 1 of Fig. 6 in a different perspective view and illustrates that the wire end 41 is supported by the supporting surfaces 49 of the wiring guide member 29.

The wire end 41 is supported at a position located further in a direction opposite the vertical direction 35 than the abutment area 65 which is explained in Fig. 3b and not visible in Fig. 7.

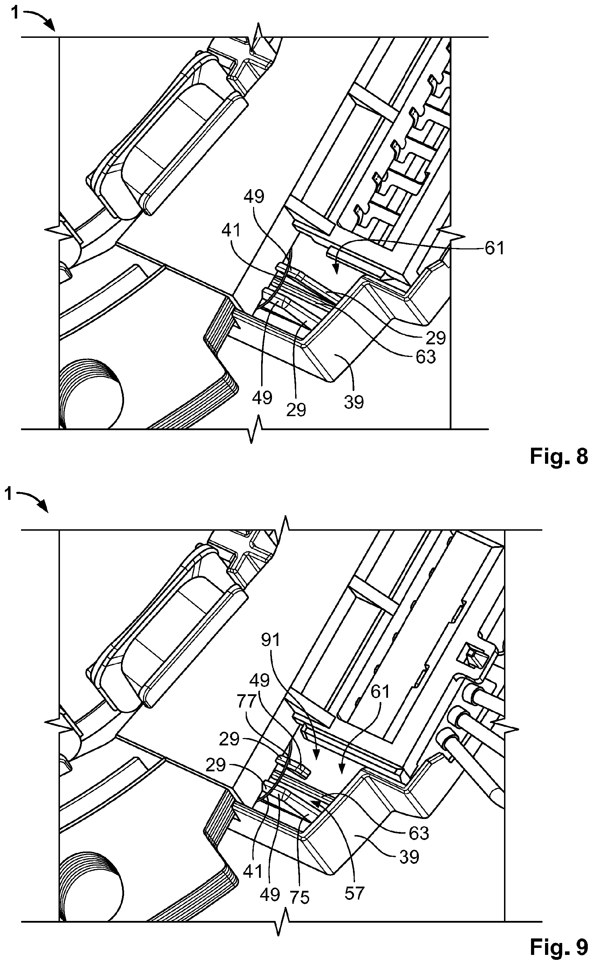

Fig. 8 shows the electric device 1 of Fig. 7, wherein the cover part 39 is attached.

Fig. 8 shows that the wire end 41 is supported by the supporting surfaces 49 of the wiring guide members 29 and is spaced apart from the trough wall 63 by means of the supporting surfaces 49. The wire end 41 is thus lifted above the trough wall 63 and then guided into the trough section 61.

Fig. 9 shows the electric device 1 of Fig. 8, wherein the filling medium 91 is provided within the trough section 61. The filling medium 91 therefore fills the trough section 61 and covers the inner wiring guide member 77 almost completely. The filling medium 91 fills the trough section 61 up to the trough wall 63 which is located in the gap 57 between the wiring guide members 29. The outer wiring guide member 75 is therefore not surrounded by the filling medium 91.

As shown in Fig. 8, the wire end 41, which is supported by the supporting surfaces 49, is guided by the wiring guide members 29 over the trough wall 63 into the trough section 61 and is therefore surrounded by the filling medium 91 within the trough section 61.

### Reference Numerals

- 1: electric device
- 3: resolver
- 5: rotational or linear motion and/or position measurement device
- 7: housing structure
- 9: internal wiring
- 11: coil assembly
- 13: circumferential direction
- 15: inner side
- 17: base part
- 19: outer side
- 21: magnetic core
- 23: inward projection
- 23a: pole
- 25: wire
- 27: auxiliary wiring guide member
- 28: monolithic wiring guide member
- 28a: corner
- 29: wiring guide member
- 29a: pair
- 30: protrusion
- 30a: first embodiment of the wiring guide member
- 30b: second embodiment of the wiring guide member
- 31: terminal area
- 31a: opposing side
- 31b: opposing side
- 33: radial direction
- 35: vertical direction
- 37: center
- 38: main section
- 39: cover part
- 41: wire end
- 43: edge
- 45: side wall
- 45a: plane side wall
- 47: connector receptacle
- 49: supporting surface
- 51: connection means
- 53: receptacle groove
- 55: filling opening
- 57: gap
- 59: cuboid
- 61: trough section
- 63: trough wall
- 65: abutment area
- 67: sealing surface
- 69: trough opening
- 71: outside electric conductor
- 73: connection portion
- 75: outer wiring guide member
- 77: inner wiring guide member
- 79: volume
- 81: wall height
- 81a: increased wall height
- 81b: minimum wall height
- 83: trough bottom
- 85: wall section
- 87: filling height
- 89: pre-sealed state
- 91: filling medium
- 93: filling assembly
- 95: nozzle
- 97: tilted surface
- 99: obtuse angle

## Claims

1. Electric device (1), such as motor or position measurement device, having a housing structure (7) and an internal wiring (9) for at least one coil assembly (11), the housing structure (7) comprising a ring-shaped or disk-shaped base part (17), a plurality of coil assemblies (11) arranged in a circumferential direction (13) at an inner side (15) of the base part (17), the base part (17) having a terminal area (31) for connecting the internal wiring (9) to at least one outside electric conductor (71), and a cover part (39) assembled to the base part (17) for covering the terminal area (31), the cover part (39) having a trough section (61) into which the terminal area (31) at least partly extends, the trough section (61) comprising a trough opening (69) from which the trough section (61) is accessible, a trough bottom (83) located opposite the trough opening (69) and at least one trough wall (63) which surrounds the trough section (61) and which at least in sections abuts the base part (17) to form a sealing surface (67), **characterized in that** the base part (17) comprises at least one wiring guide element (29) which supports the internal wiring (9) at a position spaced apart from the sealing surface (67) opposite the at least one trough wall (63) such that the internal wiring (9) extends over the at least one trough wall (63) into the trough section (61) to the terminal area (31).

2. Electric device (1) according to claim 1, wherein the at least one wiring guide element (29) is a protrusion (30) extending away from the base part (17) towards the cover part (39).

3. Electric device (1) according to claim 1 or 2, wherein the at least one wiring guide element (29) projects from a side wall (45) of the base part (17), a center of the side wall (45) being oriented essentially perpendicular to a radial direction (33) of the base part (17).

4. Electric device (1) according to any one of claims 1 to 3, wherein the base part (17) comprises a main section (38) and the terminal area (31), wherein the terminal section (31) protrudes from a main section (38) of the base part (17).

5. Electric device (1) according to claim 4, wherein the internal wiring (9) is held between a supporting surface (49) of the at least one wiring guide element (29) and the main section (38).

6. Electric device (1) according to claim 5, wherein the at least one wiring guide element (29) comprises at least one tilted surface (97), wherein the at least one tilted surface (97) and the sealing surface (67) are oriented under an obtuse angle (99), and wherein the at least one tilted surface (97) directly merges into the supporting surface (49).

7. Electric device (1) according to any one of claims 1 to 6, wherein a pair (29a) of wiring guide elements (29) is provided and wherein the at least one trough wall (63) is located opposite a gap (57) between the wiring guide elements (29).

8. Electric device (1) according to claim 7, wherein the at least one trough wall (63) protrudes into the gap (57) between the wiring guide elements (29).

9. Electric device (1) according to claim 7 or 8, wherein one of the two wiring guide elements (29) extends into the trough section (61).

10. Electric device (1) according to any one of claims 1 to 9, wherein an auxiliary wiring guide element (27) is provided which guides the internal wiring (9) from the base part (17) towards the at least one wiring guide element (29).

11. Electric device (1) according to any one of claims 1 to 10, wherein two trough walls (63) at two opposing sides (31a, 31b) of the terminal area (31) are provided and wherein the wiring (9) extends over the trough walls (63) into the trough section (61) to the terminal area (31) and wherein at least two wiring guide elements (29) are provided which support the wiring (9) at a position spaced apart from the sealing surface (67) opposite the corresponding trough wall (63).

12. Electric device (1) according to claim 11, wherein two pairs (29a) of wiring guide elements (29) are provided at the two opposing sides (31a, 31b) of the terminal area (31).

13. Electric device (1) according to any one of claims 5 to 12, wherein the internal wiring (9) is led from the housing structure (7) on the cover side (39a) of the sealing surface (67), essentially parallel to at least one trough wall (63), is guided through the sealing surface (67) abuts the supporting surface (49) of the at least one wiring guide element (29) and extends over the at least one trough wall (63) through the sealing surface (67) into the terminal area (31).

14. Electric device (1) according to any one of claims 1 to 13, wherein the trough section (61) is filled with a filling medium (91) at least partially embedding the terminal area (31).

## Patentansprüche

1. Elektrische Vorrichtung (1), wie beispielsweise ein Motor oder eine Positions-Messvorrichtung, die eine Gehäusestruktur (7) und eine interne Verdrahtung (9) für wenigstens eine Spulen-Baugruppe (11) aufweist, wobei die Gehäusestruktur (7) einen ringförmigen oder scheibenförmigen Basisteil (17), eine Vielzahl in einer Umfangsrichtung (13) an einer Innenseite (15) des Basisteils (17) angeordneter Spulen-Baugruppen (11) umfasst, wobei der Basisteil (17) einen Anschlussbereich (31) zum Verbinden der internen Verdrahtung (9) mit wenigstens einem äußeren elektrischen Leiter (71) aufweist, und einen an dem Basisteil (17) angebrachten Abdeckteil (39) zum Abdecken des Anschlussbereiches (31) umfasst, wobei der Abdeckteil (39) einen Muldenabschnitt (61) aufweist, in den sich der Anschlussbereich (31) wenigstens teilweise hinein erstreckt, der Muldenabschnitt (61) eine Muldenöffnung (69), über die der Muldenabschnitt (61) zugänglich ist, einen der Muldenöffnung (69) gegenüberliegenden Muldenboden (83) und wenigstens eine den Muldenabschnitt (61) umgebende Muldenwand (63) umfasst, die wenigstens abschnittsweise an dem Basisteil (17) anliegt und eine Dichtungsfläche (67) bildet, **dadurch gekennzeichnet, dass** der Basisteil (17) wenigstens ein Verdrahtungs-Führungselement (29) umfasst, das die interne Verdrahtung (9) an einer von der Dichtungsfläche (67) beabstandeten Stelle gegenüber der wenigstens einen Muldenwand (63) so aufnimmt, dass sich die interne Verdrahtung (9) über die wenigstens eine Muldenwand (63) in den Muldenabschnitt (61) hinein zu dem Anschlussbereich (31) erstreckt.

2. Elektrische Vorrichtung (1) nach Anspruch 1, wobei das wenigstens eine Verdrahtungs-Führungselement (29) ein Vorsprung (30) ist, der sich von dem Basisteil (17) weg auf den Abdeckteil (39) zu erstreckt.

3. Elektrische Vorrichtung (1) nach Anspruch 1 oder 2, wobei das wenigstens eine Verdrahtungs-Führungselement (29) von einer Seitenwand (45) des Basisteils (17) vorsteht und eine Mitte der Seitenwand (45) im Wesentlichen senkrecht zu einer radialen Richtung (33) des Basisteils (17) ausgerichtet ist.

4. Elektrische Vorrichtung (1) nach einem der Ansprüche 1 bis 3, wobei der Basisteil (17) einen Hauptabschnitt (38) sowie den Anschlussbereich (31) umfasst und der Anschlussbereich (31) von einem Hauptabschnitt (38) des Basisteils (17) vorsteht.

5. Elektrische Vorrichtung (1) nach Anspruch 4, wobei die interne Verdrahtung (9) zwischen einer Aufnahmefläche (49) des wenigstens einen Verdrahtungs-Führungselementes (29) und dem Hauptabschnitt (38) gehalten wird.

6. Elektrische Vorrichtung (1) nach Anspruch 5, wobei das wenigstens eine Verdrahtungs-Führungselement (29) wenigstens eine geneigte Fläche (97) umfasst, die wenigstens eine geneigte Fläche (97) und die Dichtungsfläche (67) in einem stumpfen Winkel (99) ausgerichtet sind, und die wenigstens eine geneigte Fläche (97) direkt in die Aufnahmefläche (49) übergeht.

7. Elektrische Vorrichtung (1) nach einem der Ansprüche 1 bis 6, wobei ein Paar (29a) von Verdrahtungs-Führungselementen (29) vorhanden ist und die wenigstens eine Muldenwand (63) gegenüber einem Zwischenraum (57) zwischen den Verdrahtungs-Führungselementen (29) angeordnet ist.

8. Elektrische Vorrichtung (1) nach Anspruch 7, wobei die wenigstens eine Muldenwand (63) in den Zwischenraum (57) zwischen den Verdrahtungs-Führungselementen (29) hinein vorsteht.

9. Elektrische Vorrichtung (1) nach Anspruch 7 oder 8, wobei eines der zwei Verdrahtungs-Führungselemente (29) in den Muldenabschnitt (61) hinein vorsteht.

10. Elektrische Vorrichtung (1) nach einem der Ansprüche 1 bis 9, wobei ein zusätzliches Verdrahtungs-Führungselement (27) vorhanden ist, das die interne Verdrahtung (9) von dem Basisteil (17) auf das wenigstens eine Verdrahtungs-Führungselement (29) zu führt.

11. Elektrische Vorrichtung (1) nach einem der Ansprüche 1 bis 10, wobei zwei Muldenwände (63) an zwei gegenüberliegenden Seiten (31a, 31b) des Anschlussbereiches (31) vorhanden sind, sich die Verdrahtung (9) über die Muldenwände (63) in den Muldenabschnitt (61) hinein zu dem Anschlussbereich (31) erstreckt und wenigstens zwei Verdrahtungs-Führungselemente (29) vorhanden sind, die die Verdrahtung (9) an einer von der Dichtungsfläche (67) beabstandeten Position gegenüber der entsprechenden Muldenwand (63) aufnehmen.

12. Elektrische Vorrichtung (1) nach Anspruch 11, wobei zwei Paare (29a) von Verdrahtungs-Führungselementen (29) an den zwei gegenüberliegenden Seiten (31a, 31b) des Anschlussbereiches (31) vorhanden sind.

13. Elektrische Vorrichtung (1) nach einem der Ansprüche 5 bis 12, wobei die interne Verdrahtung (9) von der Gehäusestruktur (7) an der Abdeckungs-Seite (39a) der Dichtungsfläche (67) im Wesentlichen parallel zu wenigstens einer Muldenwand (63) geleitet wird, durch die Dichtungsfläche (67) hindurch geführt wird, an der Aufnahmefläche (49) des wenigstens einen Verdrahtungs-Führungselementes (29) anliegt und sich über die wenigstens eine Muldenwand (63) durch die Dichtungsfläche (67) hindurch in den Anschlussbereich (31) hinein erstreckt.

14. Elektrische Vorrichtung (1) nach einem der Ansprüche 1 bis 13, wobei der Muldenabschnitt (61) mit einem den Anschlussbereich (31) wenigstens teilweise einbettenden Füllmittel (91) gefüllt ist.

## Revendications

1. Dispositif électrique (1), tel qu'un dispositif de mesure de position ou de moteur, présentant une structure de boîtier (7) et un câblage interne (9) pour au moins un assemblage de bobine (11), la structure de boîtier (7) comprenant une partie de base en forme d'anneau ou en forme de disque (17), une pluralité d'assemblages de bobine (11) disposés dans une direction circonférentielle (13) sur un côté intérieur (15) de la partie de base (17), la partie de base (17) présentant une zone de borne (31) pour connecter le câblage interne (9) à au moins un conducteur électrique externe (71), et une partie de capot (39) assemblée sur la partie de base (17) pour couvrir la zone de borne (31), la partie de capot (39) présentant une section creuse (61) dans laquelle la zone de borne (31) au moins partiellement s'étend, la section creuse (61) comprenant une ouverture creuse (69) depuis laquelle la section creuse (61) est accessible, un fond creux (83) positionné opposé à l'ouverture creuse (69) et au moins une paroi creuse (63) qui entoure la section creuse (61) et qui au moins par sections vient buter contre la partie de base (17) pour constituer une surface d'étanchéité (67), **caractérisé en ce que** la partie de base (17) comprend au moins un élément de guidage de câblage (29) qui soutient le câblage interne (9) à un emplacement éloigné par espacement de la surface d'étanchéité (67) opposée à l'au moins une paroi creuse (63) de sorte que le câblage interne (9) s'étend par-dessus l'au moins une paroi creuse (63) dans la section creuse (61) vers la zone de borne (31).

2. Le dispositif électrique (1) selon la revendication 1, dans lequel l'au moins un élément de guidage de câblage (29) est un débordement (30) qui s'éloigne de la partie de base (17) vers la partie de capot (39).

3. Le dispositif électrique (1) selon la revendication 1 ou 2, dans lequel l'au moins un élément de guidage de câblage (29) se projette depuis une paroi latérale (45) de la partie de base (17), un centre de la paroi latérale (45) étant orienté essentiellement perpendiculaire à une direction radiale (33) de la partie de base (17).

4. Le dispositif électrique (1) selon l'une quelconque des revendications 1 à 3, dans lequel la partie de base (17) comprend une section principale (38) et la zone de borne (31), dans lequel la zone de borne (31) déborde depuis une section principale (38) de la partie de base (17) .

5. Le dispositif électrique (1) selon la revendication 4, dans lequel le câblage interne (9) est maintenu entre une surface de soutien (49) de l'au moins un élément de guidage de câblage (29) et la section principale (38).

6. Le dispositif électrique (1) selon la revendication 5, dans lequel l'au moins un élément de guidage de câblage (29) comprend au moins une surface inclinée (97), dans lequel l'au moins une surface inclinée (97) et la surface d'étanchéité (67) sont orientées sous un angle obtus (99), et dans lequel l'au moins une surface inclinée (97) se fond directement dans la surface de soutien (49).

7. Le dispositif électrique (1) selon l'une quelconque des revendications 1 à 6, dans lequel une paire (29a) d'éléments de guidage de câblage (29) est disposée et dans lequel l'au moins une paroi creuse (63) est positionnée opposée à un écart (57) entre les éléments de guidage de câblage (29).

8. Le dispositif électrique (1) selon la revendication 7, dans lequel l'au moins une paroi creuse (63) déborde dans l'écart (57) entre les éléments de guidage de câblage (29).

9. Le dispositif électrique (1) selon la revendication 7 ou 8, dans lequel un des deux éléments de guidage de câblage (29) s'étend dans la section creuse (61).

10. Le dispositif électrique (1) selon l'une quelconque des revendications 1 à 9, dans lequel un élément de guidage de câblage auxiliaire (27) est disposé qui guide un câblage interne (9) de la partie de base (17) vers l'au moins un élément de guidage de câblage (29).

11. Le dispositif électrique (1) selon l'une quelconque des revendications 1 à 10, dans lequel deux parois creuses (63) sur deux côtés opposés (31a, 31b) de la zone de borne (31) sont disposées et dans lequel le câblage (9) s'étend par-dessus les parois creuses (63) dans la section creuse (61) vers la zone de borne (31) et dans lequel au moins deux éléments de guidage de câblage (29) sont disposés qui soutiennent le câblage (9) à un emplacement éloigné par espacement de la surface d'étanchéité (67) opposée à la paroi creuse correspondante (63).

12. Le dispositif électrique (1) selon la revendication 11, dans lequel deux paires (29a) d'éléments de guidage de câblage (29) sont disposées sur deux côtés opposés (31a, 31b) de la zone de borne (31).

13. Le dispositif électrique (1) selon l'une quelconque des revendications 5 à 12, dans lequel le câblage interne (9) est conduit de la structure de boîtier (7) sur le côté de capot (39a) de la surface d'étanchéité (67), essentiellement parallèle à au moins une paroi (63), est guidé à travers la surface d'étanchéité (67) vient buter contre la surface de soutien (49) de l'au moins un élément de guidage de câblage (29) et s'étend par-dessus l'au moins une paroi creuse (63) à travers la surface d'étanchéité (67) dans la zone de borne (31).

14. Le dispositif électrique (1) selon l'une quelconque des revendications 1 à 13, dans lequel la section creuse (61) est remplie d'un moyen de remplissage (91) incorporant au moins partiellement la zone de borne (31) .
